(19) **Europäisches Patentamt / European Patent Office / Office européen des brevets**

(11) **EP 1 300 304 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(51) Int Cl.:
*B60S 1/08* [(2006.01)]     *G05B 17/02* [(2006.01)]

(21) Anmeldenummer: **02022176.8**

(22) Anmeldetag: **04.10.2002**

(54) **Verfahren zur Reduzierung von Ratterschwingungen in elektronisch geregelten Scheibenwischanlagen**

Method for reducing rattling oscillations in electronically controlled windscreen wiper devices

Méthode pour réduire les oscillations de broutage dans les dispositifs d'essuie-glace controllé électroniquement

(84) Benannte Vertragsstaaten:
**DE ES FR GB IT**

(30) Priorität: **04.10.2001 DE 10149170**

(43) Veröffentlichungstag der Anmeldung:
**09.04.2003 Patentblatt 2003/15**

(73) Patentinhaber: **ROBERT BOSCH GMBH**
**70442 Stuttgart (DE)**

(72) Erfinder:
- **Moench, Jochen**
  **76547 Sinzheim (DE)**
- **Moosmann, Johannes**
  **77830 Buehlertal (DE)**
- **Krueger, Hartmut**
  **77830 Buehlertal (DE)**

(56) Entgegenhaltungen:
EP-A- 0 241 563     EP-A- 0 483 367
EP-A- 1 096 122     WO-A-01/64488
WO-A-01/86363     DE-A- 3 932 214
DE-A- 19 634 923     DE-A- 19 751 375
US-A- 5 757 155

- VENTZAS D E ED - INSTITUTE OF ELECTRICAL AND ELECTRONICS ENGINEERS: "KALMAN FILTERS FOR DYNAMIC POSITION CONTROL OF LARGE SCALE SYSTEMS" 5. August 1996 (1996-08-05), PROCEEDINGS OF THE 1996 IEEE IECON: 22ND. INTERNATIONAL CONFERENCE ON INDUSTRIAL ELECTRONICS, CONTROL, AND INSTRUMENTATION. TAIPEI, AUG. 5 - 9, 1996, PROCEEDINGS OF IEEE IECON: INTERNATIONAL CONFERENCE ON INDUSTRIAL ELECTRONICS, CONTROL, AND INSTRUME , XP000695844 ISBN: 0-7803-2776-4 * Seite 647 - Seite 651; Abbildung 2 *

EP 1 300 304 B1

# EP 1 300 304 B1

## Beschreibung

Die Erfindung betrifft ein Verfahren zur Reduzierung von Schwingungen in elektronisch geregelten Scheibenwischanlagen.

Scheibenwischanlagen, insbesondere für Kraftfahrzeuge, können mit Hilfe eines elektronisch geregelten Elektromotors angesteuert werden. Die Regelung des Elektromotors kann eine Lage- und/oder eine Drehzahlregelung umfassen. Bei ungünstigen Randbedingungen zwischen einer zu wischenden Scheibe und einem Wischerblatt eines Wischarms, wie sie beispielsweise bei einer abtrocknenden Scheibe auftreten können, kann es zu sogenannten Ratterschwingungen des Wischarms kommen. Diese äußern sich in Schwankungen von Wischarm- bzw. Wischwinkelgeschwindigkeit, wobei die Schwankungen je nach Randbedingung unterschiedlich stark ausgeprägt sein können.

Auftretende Ratterschwingungen können derart ausgeprägt sein, dass das Wischerblatt wiederholt kurzzeitig auf der Scheibe haftet und sich anschliessend losreisst (Stick-Slip), wodurch ein optimaler Kontakt zwischen der Scheibe und dem Wischgummi nicht gewährleistet ist. Ferner kann es sich bei den Schwingungen um Schwankungen der Wischerblatt- bzw. Wischarmgeschwindigkeit handeln, wobei das Wischerblatt jedoch nicht auf der Scheibe haftet.

Dadurch ist eine Wischqualität in erheblicher Weise beeinträchtigt. Zusätzlich kann durch die Ratterschwingungen ein erhöhter Verschleiß des am Wischarm angebrachten Wischgummis verursacht werden. Ausserdem sind Komforteinbußen durch unruhigen Verlauf des Wischarms sowie eine störende Geräuschentwicklung festzustellen. Eine Leistungsfähigkeit und Annehmlichkeit der Scheibenwischanlage kann durch das Auftreten der Ratterschwingungen also in einem erheblichen Ausmaß vermindert sein.

Das Dokument DE19751375A offenbart ein gattungsgemässes Verfahren. Es ist die Aufgabe der Erfindung, ein Verfahren bereitzustellen, das Schwingungen von elektronisch geregelten Scheibenwischanlagen reduziert.

Erfindungsgemäß wird die Aufgabe durch ein Verfahren mit den Merkmalen gemäß Anspruch 1 gelöst.

Weitere vorteilhafte Ausgestaltungen des erfindungsgemäßen Verfahrens sind in den abhängigen Ansprüchen angegeben. Erfindungsgemäß werden einer Erkennungseinrichtung einer Scheibenwischvorrichtung eine Eingangsgrösse und eine gemessene Ausgangsgrösse der Scheibenwischvorrichtung zugeführt. Ein in der Erkennungseinrichtung abgelegtes mathematisches Modell, das Eigenschaften der Scheibenwischvorrichtung beschreibt, weist wenigstens eine Prozessgrösse auf. Eine der Prozessgrössen des Modells ist der gemessenen Ausgangsgrösse zugeordnet. Wenigstens eine der Prozessgrössen des mathematischen Modells wird mittels eines Vergleichs mit der gemessenen Ausgangsgrösse optimiert und über Gewichtungsfaktoren zur Generierung einer Korrekturgrösse verwendet. Die Korrekturgrösse wird letztendlich der Eingangsgrösse der Scheibenwischvorrichtung zugeführt.

Die Scheibenwischvorrichtung ist somit, im Unterschied zu herkömmlich geregelten Scheibenwischvorrichtungen, nicht ausschließlich mit Hilfe von gemessenen Grössen der Scheibenwischvorrichtung geregelt, sondern bezieht optimierte Prozessgrössen des mathematischen Modells in die Regelung mit ein.

Vorteilhafterweise benötigt das erfindungsgemäße Verfahren keinerlei zusätzliche Sensorik. Ein weiterer Vorteil des erfindungsgemässen Verfahrens besteht darin, dass das mathematische Modell mit nahezu beliebiger Genauigkeit an reale physikalische Gegebenheiten der Scheibenwischvorrichtung angepaßt werden kann. Die Optimierung der Regelung kann somit in flexibler Weise weitgehend an eine verfügbare Rechenleistung eines Steuergerätes der Scheibenwischvorrichtung angepaßt werden.

Vorzugsweise bildet das in der Erkennungseinrichtung abgelegte mathematische Modell mechanische und/oder elektrische Eigenschaften der Scheibenwischvorrichtung ab.

Vorzugsweise handelt es sich bei dem mathematischen Modell um ein Streckenmodell, in dem wesentliche dynamische Eigenschaften der Scheibenwischvorrichtung formuliert sind. Diese können beispielsweise Charakteristiken des Elektromotors, wie z.B. Induktivitäten oder Motorkonstanten sein. Ferner können im Streckenmodell Elastizitäten, Trägheiten und Steifigkeiten eines Übersetzungsgetriebes für den Wischarm bzw. des Wischarms formuliert sein.

In besonderer Weise ist das erfindungsgemäße Verfahren für Scheibenwischanlagen geeignet, bei denen der Wischarm direkt auf dem Abtrieb des den Wischarm antreibenden Getriebes, üblicherweise eines Schneckengetriebes, angebracht ist. Dies bringt vereinfachende Linearitäten in der Formulierung des mathematischen Modells mit sich.

Ein auf den Wischarm während des Wischens einwirkendes Lastmoment kann vorzugsweise als Störgrösse eines mathematischen Störmodell eingeführt werden, welches auf das Streckenmodell wirkt. Dadurch ist es möglich, das üblicherweise nicht messbare Lastmoment, das sich vor allem aus Reibungs-, Windlast und Beschleunigungsanteilen zusammensetzt, als modellierte Störgrösse zu definieren, wodurch sich in einfacher Weise eine Störgrössenkompensation für das Lastmument erzielen lässt.

In einer weiteren bevorzugten Ausführungsform der Erfindung ist ein Zustandsbeobachter in das mathematische Streckenmodell eingeführt, mit dessen Hilfe es möglich ist, aus einer dem Zustandsbeobachter zugeführten gemessenen Ausgangsgrösse der Scheibenwischvorrichtung weitere typische Prozessgrössen des Streckenmodells der Scheibenwischvorrichtung zu ermitteln und zu optimieren.

Bevorzugte Ausführungsformen der Erfindung werden im Folgenden anhand der beigefügten Zeichnungen beschrieben. Dabei zeigt:

Fig. 1 eine Scheibenwischvorrichtung mit einer konventionellen Regelung;

Fig. 2 eine prinzipielle Darstellung eines mathematischen Modells der Scheibenwischvorrichtung;

Fig. 3 eine erste Ausführungsform der Scheibenwischvorrichtung bei der das erfindungsgemäße Verfahren eingesetzt wird;

Fig. 4 eine zweite Ausführungsform der Scheibenwischvorrichtung bei der das erfindungsgemäße Verfahren eingesetzt wird;

Fig. 5 eine dritte Ausführungsform der Scheibenwischvorrichtung bei der das erfindungsgemäße Verfahren eingesetzt wird;

Fig. 6 in zwei Diagrammen a) und b) prinzipielle Zeitverläufe des Wischwinkels ohne und mit der erfindungsgemäßen Ratterkompensation;

Fig. 7 in zwei Diagrammen a) und b) prinzipielle Zeitverläufe der Wischwinkelgeschwindigkeit ohne und mit der erfindungsgemäßen Ratterkompensation;

Fig. 8 ein Diagramm, welches eine prinzipielle Abhängigkeit einer Windlast auf den Wischarm vom Wischwinkel des Wischarms darstellt; und

Fig. 9 eine Möglichkeit zur verbesserten Ermittlung des auf den Wischarm wirkenden Lastmoments.

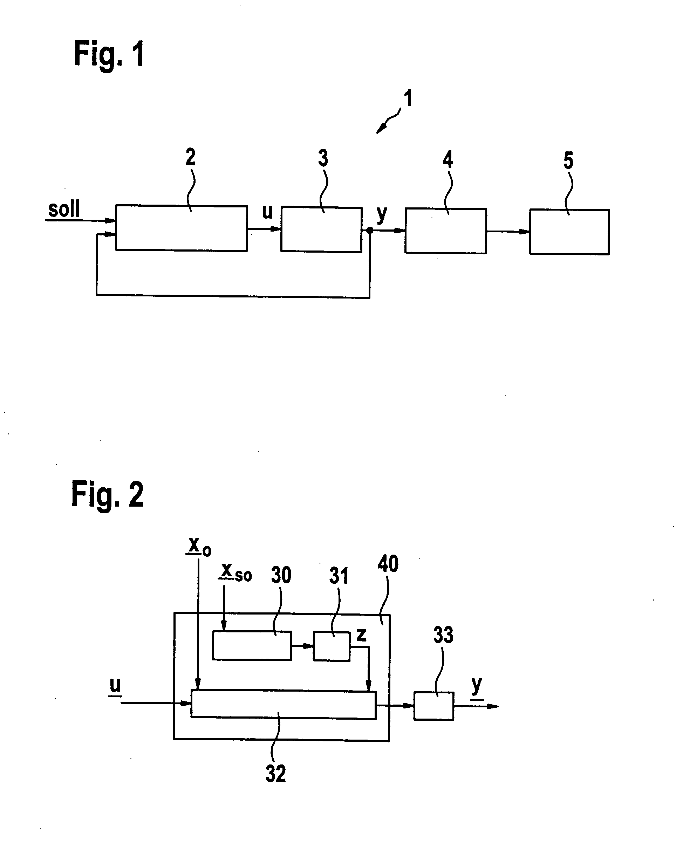

Fig. 1 zeigt eine Scheibenwischvorrichtung 1 die mit einer herkömmlichen Regelungsstruktur geregelt ist. Die Scheibenwischvorrichtung 1 umfaßt dabei einen Regler 2, einen Elektromotor 3, ein Getriebe 4 und einen Wischarm 5. Der Regler ist mit dem Elektromotor verbunden, der Elektromotor ist weiterhin mit dem Getriebe verbunden. Das Getriebe ist ferner mit dem Wischarm verbunden.

Dem Regler wird ein Sollwert SOLL einer den Elektromotor steuernden Eingangsgrösse u sowie eine gemessene Ausgangsgrösse y des Elektromotors zugeführt. Dabei kann als gemessene Ausgangsgrösse ein Abtriebswinkel einer Motorankerwelle des Elektromotors verwendet werden. Anstelle des Abtriebswinkels kann als Ausgangsgrösse auch die Drehzahl des Elektromotors aus dem Abtriebswinkel berechnet und dem Regler zugeführt werden. Ein Abtriebswinkel kann auch nach dem Getriebe gemessen und dem Regler zugeführt werden.

Aufgrund von Elastizitäten des Getriebes und des Wischarms kann eine tatsächliche Position des Wischarms von einer gemessenen abweichen. Gleiches gilt für eine tatsächliche Geschwindigkeit des Wischarms im Vergleich zu einer aus einer Messung ermittelten Geschwindigkeit. Der herkömmlichen Regelung wird lediglich eine gemessene Grösse zugeführt. Informationen über Systemzustände am Wischarm werden in der herkömmlichen Regelungsstruktur nicht erfaßt und berücksichtigt, so daß Ratterschwingungen des Wischarms nur bedingt dämpfbar sind.

Bessere Eingriffsmöglichkeiten bestehen, wenn die interessierenden Informationen über Systemzustände am Wischarm, wie beispielsweise eine Position, eine Geschwindigkeit oder andere Grössen (Beschleunigung, Moment) gemessen werden. Dies erfordert allerdings den Einsatz eines oder mehrerer zusätzlicher Sensoren, was einen Schaltungsaufwand und Kosten für die Scheibenwischvorrichtung in nachteiliger Weise erhöht. Erfindungsgemäss wird zur Bestimmung von am Wischarm vorherrschenden, interessierenden Systemgrössen ein mathematisches Modell verwendet.

Grundlage ist ein mathematisches Streckenmodell der gesamten Scheibenwischvorrichtung, das in folgender Form beschrieben werden kann:

Zustandsdifferentialgleichung:

$$\dot{\underline{x}}_M = \underline{A}_M \underline{x}_M + \underline{B}_M \underline{u} + \underline{E}\,\underline{z}$$

Gleichung für die Messgrösse:

$$\underline{y} = \underline{C}_M\,\underline{x}_M$$

Das Streckenmodell kann um ein Störmodell für eine Störgrösse z erweitert werden, wobei das Störmodell folgendermaßen darstellbar ist:

$$\dot{\underline{x}}_S = \underline{A}_S \; \underline{x}_S$$

$$\underline{z} = \underline{C}_S \; \underline{x}_S$$

Die einzelnen Variablen und Parameter des Strecken- und des Störmodells haben dabei folgende Bedeutung:

$\underline{x}_M$     Zustandgrösse des Streckenmodells
$\underline{x}_O$     Anfangswert der Zustandsgrösse des Streckenmodells
$\underline{x}_S$     Zustandgrösse des Störmodells
$\underline{x}_{So}$     Anfangswert der Zustandsgrösse des Störmodells
$\underline{u}$     Stellgrösse
$\underline{y}$     Ausgangsgrösse
$\underline{z}$     Störgrösse
$\underline{A}_M$     Dynamikmatrix des Streckenmodells
$\underline{B}_M$     Eingangsmatrix des Streckenmodells
$\underline{C}_M$     Ausgangsmatrix des Streckenmodells
$\underline{A}_S$     Dynamikmatrix des Störmodells
$\underline{E}$     Matrix, über die die Störgrösse $\underline{z}$ auf das Streckenmodell wirkt

Im Streckenmodell sind wesentliche dynamische Eigenschaften der Scheibenwischvorrichtung mathematisch formuliert. Dies kann in Form von Grössen erfolgen, die aus physikalischen Parametern abgeleitet sind. Beispielsweise kann das eine elektrische und/oder mechanische Charakteristik des Elektromotors, Elastizitäten des Getriebes und des Wischarms sowie deren Trägheitsmomente umfassen. Das normalerweise nicht messbare Lastmoment auf den Wischarm, das sich aus Reibungs-, Windlast- sowie Beschleunigungsanteilen zusammensetzt, wird vorteilhafterweise als eine Störgrösse definiert.

Fig. 2 zeigt eine prinzipielle Darstellung des Streckenmodells. Ein erweitertes Streckenmodell 40 umfasst dabei ein Streckenmodell 32, ein Störmodell 30 und eine Ausgangsmatrix des Störmodells 31. Die Stellgrösse $\underline{u}$ bzw. ein Anfangszustand $\underline{x}_0$ dienen der definierten Zustandsbeschreibung des dynamischen Streckenmodells. Ein Anfangszustand $\underline{x}_{S0}$ des Störmodells dient einer definierten Zustandsbeschreibung des Störmodells. Über eine Ausgangsmatrix des Streckenmodells 33 steht eine Ausgangsgrösse $\underline{y}$ des erweiterten Streckenmodells zur Verfügung.

Das erweiterte Streckenmodell lässt sich durch folgende Beziehungen beschreiben:

$$\underbrace{\begin{bmatrix} \dot{\underline{x}}_M \\ \dot{\underline{x}}_S \end{bmatrix}}_{\dot{\underline{x}}} = \underbrace{\begin{bmatrix} \underline{A}_M & \underline{E}\underline{C}_S \\ 0 & \underline{A}_S \end{bmatrix}}_{\underline{A}} \underbrace{\begin{bmatrix} \underline{x}_M \\ \underline{x}_S \end{bmatrix}}_{\underline{x}} + \underbrace{\begin{bmatrix} \underline{B}_M \\ 0 \end{bmatrix}}_{\underline{B}} \underline{u}$$

$$\underline{y} = \underbrace{\begin{bmatrix} \underline{C}_M & 0 \end{bmatrix}}_{\underline{C}} \begin{bmatrix} \underline{x}_M \\ \underline{x}_S \end{bmatrix}$$

Mit Hilfe eines Zustandsbeobachters aus dem Stand der Technik (z.B. Luenberger-Beobachter oder Kalman-Filter) können Zustandsgrössen des Streckenmodells mittels eines Schätzprozesses ermittelt werden. Der Zustandsbeobachter lässt sich dabei in folgender Form darstellen:

$$\dot{\hat{\underline{x}}} = (\underline{A} - \underline{L}\,\underline{C})\,\hat{\underline{x}} + \underline{B}\,\underline{u} + \underline{L}\,\underline{y}$$

$$\hat{\underline{y}}_B = \underline{C}_R\,\hat{\underline{x}} + \underline{D}_n\,\underline{u}$$

Dabei ist $\underline{L}$ eine im Entwurfsprozess des Zustandsbeobachters zu definierende Grösse. Bei geeigneter Formulierung der Beobachtermatrizen $\underline{C}'_B$ und $\underline{D}_B$ steht unter anderem ein auf den Wischarm wirkendes, geschätztes Lastmoment M als Ausgangsgrösse $\underline{\hat{y}}_B$ des Zustandsbeobachters zur Verfügung und kann für eine optimierte Regelung der Scheibenwischvorrichtung herangezogen werden.

Erläuterungen zur Zustandsschätzung mittels Zustandsbeobachters finden sich im Lehrbuch von Gerd Schulz "Regelungstechnik" (Oldenbourg Verlag München Wien, ISBN 3-486-25858-3) auf den Seiten 121ff.

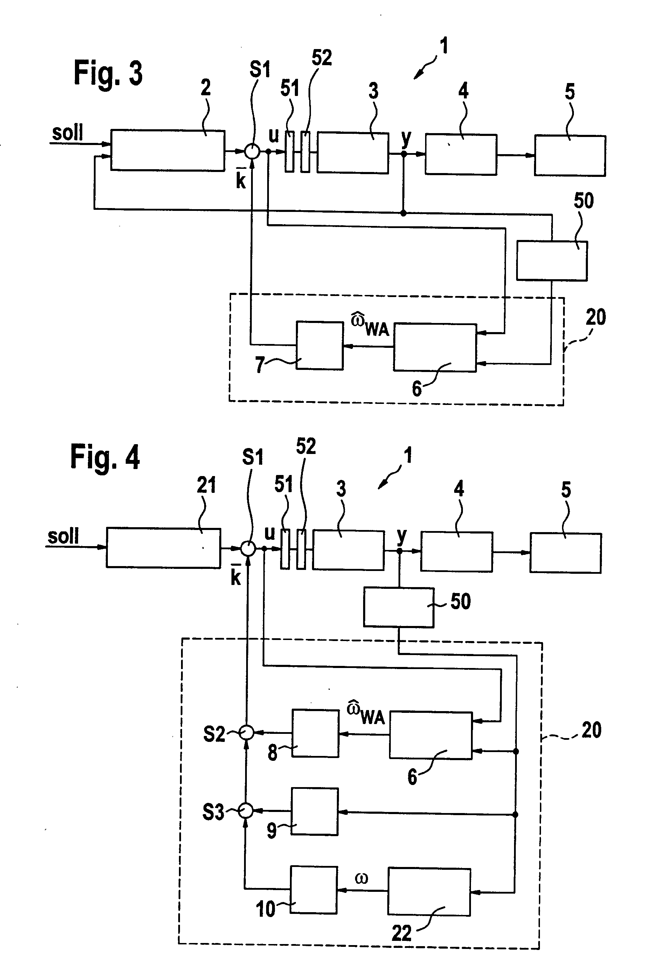

Fig. 3 zeigt eine erste Ausführungsform einer Scheibenwischvorrichtung, bei der das erfindungsgemäße Verfahren eingesetzt wird. Dabei ist ersichtlich, dass die herkömmliche Regelungsstruktur gemäß Fig. 1 um eine Erkennungseinrichtung 20 erweitert ist. Die Erkennungseinrichtung umfasst einen Zustandsbeobachter 6 und eine erste Korrektureinrichtung 7. Der Erkennungseinrichtung 20 wird eine Eingangsgrösse u des Elektromotors sowie eine gemessene Ausgangsgrösse y des Elektromotors, die von einer ersten Signalverarbeitungseinrichtung 50 analog-digital gewandelt wird, zugeführt. Die Eingangsgrösse u ist dabei vorzugsweise eine elektrische Spannung, die gemessene Ausgangsgrösse y ist vorzugsweise ein Dreh- bzw. Wischwinkel des Elektromotors.

Aus den der Erkennungseinrichtung 20 zugeführten Grössen ermittelt die Erkennungseinrichtung 20 werte für Prozeßgrössen des mathematischen Streckenmodells, wobei eine der Prozeßgrössen der Ausgangsgrösse y zugeordnet ist. Dabei werden die Werte der Prozessgrössen mittels eines Zustandsbeobachters 6 geschätzt. Durch Minimieren einer Differenz zwischen der Ausgangsgrösse y und der der Ausgangsgrösse y zugeordneten, geschätzten Prozessgrösse können alle Prozessgrössen optimiert werden.

Der Zustandsbeobachter 6 führt mit den zugeführten Grössen u und y beispielsweise eine Schätzung einer Wischarmgeschwindigkeit des Wischarms durch. Die geschätzte Wischarmgeschwindigkeit $\hat{\omega}_{WA}$ steht am Ausgang des Zustandsbeobachters zur Verfügung und wird der ersten Korrektureinrichtung 7 zugeführt, die die geschätzte Wischarmgeschwindigkeit $\hat{\omega}_{WA}$ gewichtet zur Bildung einer Korrekturgrösse k verwendet. Die Korrekturgrösse k wird mit einem negativen Vorzeichen zusammen mit einer Ausgangsgrösse des Reglers 2 an einen ersten Summationspunkt S1 geführt. Vom ersten Summationspunkt S1 wird dem Elektromotor 3 die Eingangsgrösse u über eine zweite Signalverarbeitungseinrichtung 51 und eine Ansteuerelektronik 52 digital-analog gewandelt und verstärkt zugeführt.

Der Regler 2 für die Regelung der Scheibenwischvorrichtung 1 wird von der Korrekturgrösse k also in vorteilhafter Weise derart unterstützt, dass Systemzustände am Wischarm für die Regelung verwendet werden. Eine Regelgüte kann dadurch in erheblicher Weise verbessert sein.

Fig. 4 zeigt eine zweite Ausführungsform der Scheibenwischvorrichtung, bei der das erfindungsgemäße Verfahren eingesetzt wird. Der Erkennungseinrichtung wird die Eingangsgrösse u sowie die gemessene Ausgangsgrösse y des Elektromotors, die von der ersten Signalverarbeitungseinrichtung 50 analog-digital gewandelt wird, zugeführt.

Die Ausführungsform von Fig. 4 zeigt die Einrichtung der Fig. 3, wobei die Erkennungseinrichtung 20 weitere Funktionen aufweist. Die Erkennungseinrichtung 20 weist eine dritte Einrichtung 22 auf, die als Filter ausgebildet ist. Das Filter führt eine Drehzahlbildung durch, indem es aus der Ausgangsgrösse y, die in der Ausführungsform als Drehwinkel ausgebildet ist, eine Drehzahl $\omega$ ermittelt. Über eine zweite Korrektureinrichtung 8 wird die von der Erkennungseinrichtung 20 ermittelte Prozessgrösse Wischwinkelgeschwindigkeit $\hat{\omega}_{WA}$ gewichtet einem zweiten Summationspunkt S2 für die Bildung der Korrekturgrösse k zugeführt. Ferner wird über eine dritte Korrektureinrichtung 9 die Ausgangsgrösse y gewichtet einem dritten Summationspunkt S3 zur Bildung der Korrekturgrösse k zugeführt. Der Drehwinkel $\omega$ wird über eine vierte Korrektureinrichtung 10 gewichtet ebenfalls dem dritten Summationspunkt S3 zur Bildung der Korrekturgrösse k zugeführt.

Eine Ausgangsgrösse des dritten Summationspunktes S3 wird dem zweiten Summationspunkt S2 zugeführt. Die vom zweiten Summationspunkt S2 abgeführte Korrekturgrösse k wird dem ersten Summationspunkt S1 mit negativem Vorzeichen zugeführt. Vom ersten Summationspunkt S1 wird dem Elektromotor die Eingangsgrösse u über die zweite Signalverarbeitungseinrichtung 51 und die Ansteuerelektronik 52 digital-analog gewandelt und verstärkt zugeführt. Die Korrekturgrösse k regelt also in vorteilhafter Weise zusammen mit einer zweiten Einrichtung 21, die als eine Vorsteuermatrix H ausgebildet sein kann, die Eingangsgrösse u des Elektromotors.

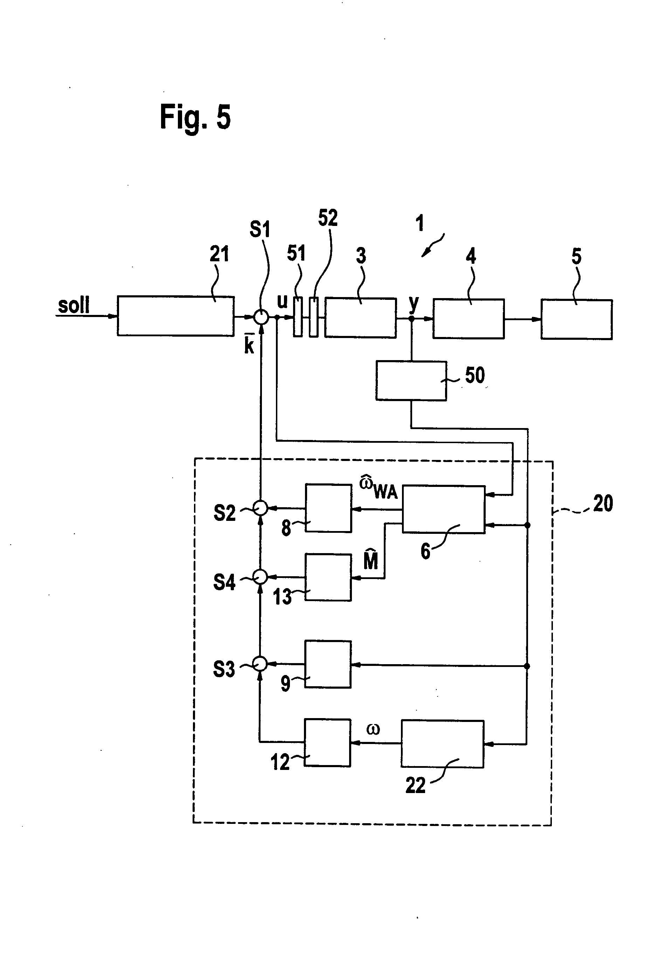

Fig. 5 zeigt eine dritte Ausführungsform der Scheibenwischvorrichtung, bei der das erfindungsgemäße Verfahren eingesetzt wird. Die Erkennungseinrichtung 20 weist zusätzlich zu der in Fig. 4 gezeigten Ausführungsform eine fünfte Korrektureinrichtung 13 auf, die ein vom Zustandsbeobachter ermitteltes, auf den Wischarm wirkendes Lastmoment $\hat{M}$ gewichtet einem vierten Summationspunkt S4 für die Bildung der Korrekturgrösse k zuführt. Näherungsweise lässt sich auf diese Weise eine Störgrössenkompensation für das Lastmoment erzielen. Eine weitere Optimierung der Regelung läßt sich somit erreichen.

Durch eine geeignete Ausgestaltung der Zustandsbeobachtermatrizen $\underline{C}_B$ und $\underline{D}_B$ können als Ausgangsgrösse des Zustandsbeobachters 6 auch andere als die in den Figuren 3, 4 und 5 genannten Zustandsgrössen zur Verfügung stehen. Insbesondere können entweder eine Auswahl davon oder auch alle durch Korrektureinrichtungen gewichtet zur Bildung der Korrekturgrösse k verwendet werden. Die Erkennungseinrichtung 20 ist dabei um jene Grössen, die zusätzlich zur Bildung der Korrekturgrösse verwendet werden sollen, zu erweitern. Zu den dafür in Frage kommenden interessanten Zustandsgrössen zählen beispielsweise eine Wischarmbeschleunigung, eine Differenz von Wischarmgeschwindigkeit und einer Geschwindigkeit einer Getriebewelle des Elektromotors, ein vom Elektromotor auf den Wischarm übertragenes Drehmoment, sowie der Drehwinkel des Wischarms.

Als Eingangsgrösse für den Zustandsbeobachter können neben der Eingangsgrösse u und der gemessenen Ausgangsgrösse y auch andere Signale verwendet werden. Beispielsweise lässt sich zusätzlich zum oder anstelle des gemessenen Wischwinkels auch die Drehzahl, die mit Hilfe eines Differenzierfilters gewonnen und gegebenenfalls noch mit einem Gewichtungsfaktor versehen wird, verwenden.

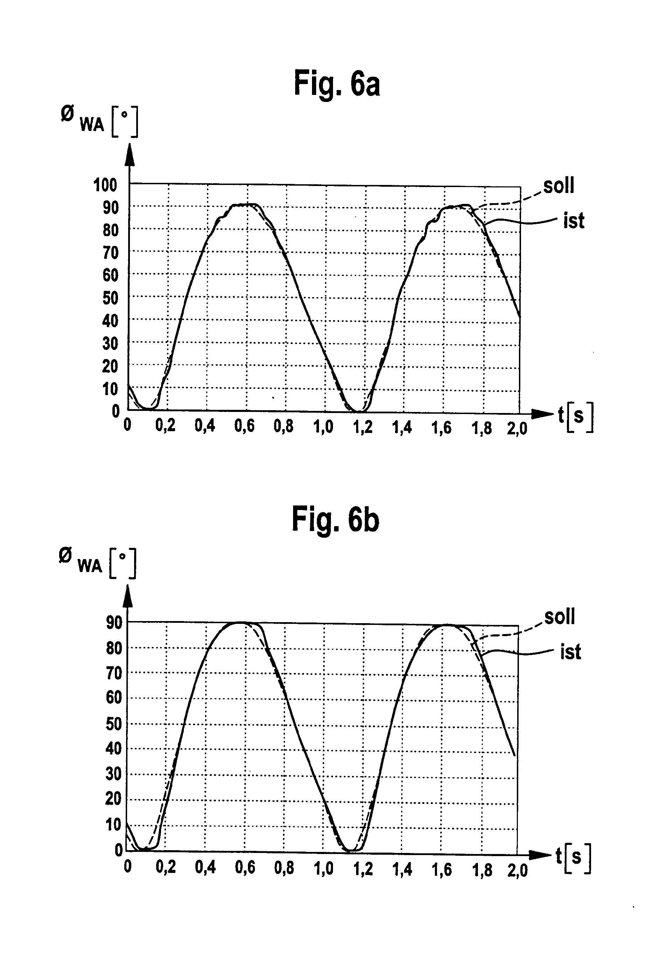

Fig. 6 zeigt in zwei Diagrammen a) und b) prinzipielle Zeitverläufe des Wischwinkels $\Phi_{WA}$ des Wischarms bei einer hohen Windlast und einem hohen Reibwert zwischen Wischarm und Scheibe. Dabei zeigt das Diagramm a) einen Wischwinkelverlauf ohne erfindungsgemäße Ratterkompensation, wohingegen Diagramm b) einen Wischwinkelverlauf mit erfindungsgemäßer Ratterkompensation zeigt. Aus einem Vergleich der beiden Diagramme a) und b) ist ersichtlich, dass durch die erfindungsgemäße Ratterkompensation eine verbesserte Übereinstimmung eines Wischwinkelsollverlaufs mit einem Wischwinkelistverlauf bzw. eine Glättung des Wischwinkelistverlaufs erzielbar ist.

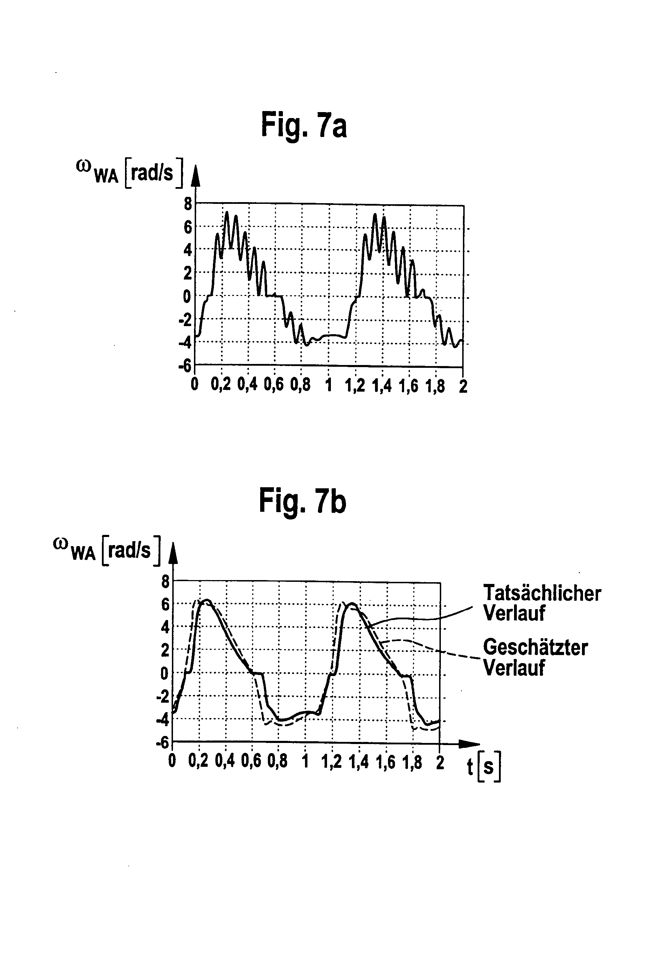

Fig. 7 zeigt in zwei Diagrammen a) und b) prinzipielle Zeitverläufe der Wischwinkelgeschwindigkeit $\omega_{WA}$ bei einer hohen Windlast und einem hohen Reibwert zwischen Wischarm und Scheibe. Dabei zeigt das Diagramm a) einen Wischwinkelgeschwindigkeitsverlauf ohne Ratterkompensation und das Diagramm b) einen Wischwinkelgeschwindigkeitsverlauf mit erfindungsgemäßer Ratterkompensation. Aus einem Vergleich der beiden Diagramme a) und b) ist ersichtlich, dass durch die erfindungsgemäße Ratterkompensation eine weitgehende Reduzierung von abrupten Wischwinkelgeschwindigkeitsänderungen erzielbar ist. Ferner ist aus Diagramm b) ersichtlich, dass der tatsächliche Verlauf der Wischwinkelgeschwindigkeit mit einem vom Zustandsbeobachter ermittelten Verlauf weitgehend übereinstimmt.

Verbesserungen hinsichtlich der Schätzung des auf den Wischarm wirkenden Lastmoments lassen sich erzielen, wenn weitere zur Verfügung stehende Informationen über die Umgebung mitberücksichtigt werden. Dies betrifft beispielsweise Regensensorinformationen und/oder Informationen über eine Fahrzeuggeschwindigkeit. Abhängigkeiten von Reibwerten zwischen den Wischgummis der Wischarme und der Scheibe von der Wischgeschwindigkeit und einem Feuchtigkeitszustand der Scheibe sind bekannt. Diese Abhängigkeiten sind in Kennfeldern in einem Speicher eines Steuergerätes der Scheibenwischvorrichtung abgelegt. Weiters sind aus Messungen charakteristische Verläufe der Windlast in Abhängigkeit einer Anströmgeschwindigkeit auf den Wischarm und dem Wischwinkel bekannt.

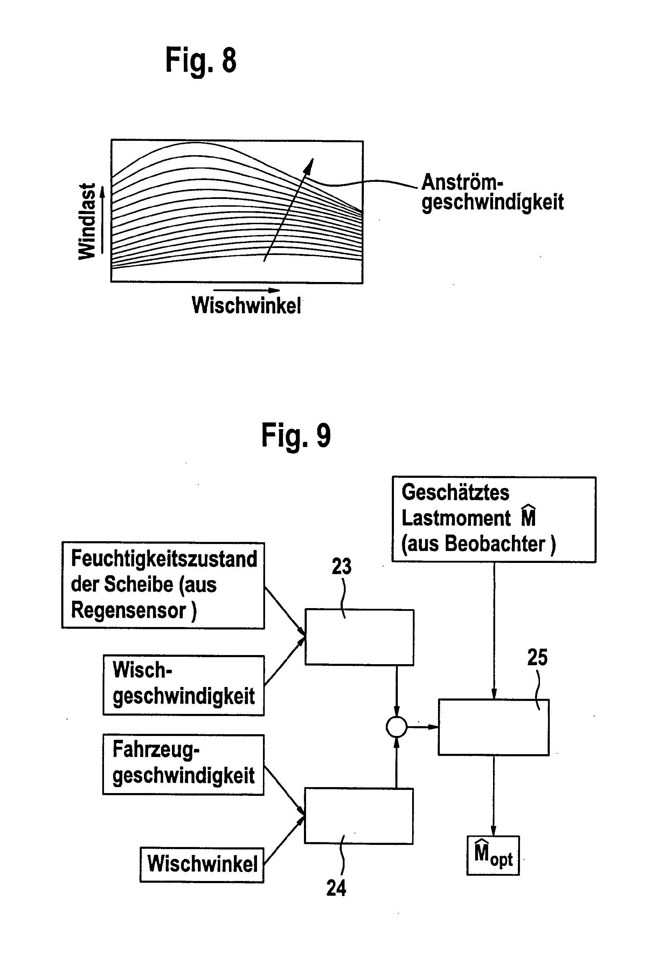

In Fig. 8 sind derartige Verläufe qualitativ dargestellt. Die Figur zeigt Verläufe der auf den Wischarm wirkenden Windlast in Abhängigkeit vom Wischwinkel, mit der auf den Wischarm einwirkenden Anströmgeschwindigkeit des Windes als Parameter. Vorteilhafterweise können aus solchen Verläufen weitere Prozessgrössen für das erfindungsgemäße Verfahren abgeleitet und verwendet werden.

Fig. 9 zeigt schematisch, wie das vom Zustandsbeobachter ermittelte Lastmoment M auf den Wischarm unter Berücksichtigung zusätzlicher Prozessgrössen optimiert werden kann. Eine vierte Einrichtung 23 stellt ein Kennfeld für einen Reibungskoeffizienten zwischen Wischarm und Scheibe bereit, wobei die Kennfelddaten aus Informationen eines Regensensors über den Feuchtigkeitszustand der Scheibe bzw. aus der Wischarmgeschwindigkeit stammen. Die vierte Einrichtung 23 führt aus den abgelegten Kennfelddaten eine weitere Ermittlung des Lastmoments auf den Wischarm durch.

Eine fünfte Einrichtung 24 stellt ein Kennfeld für die windlast auf den Wischarm bereit, wobei die Kennfelddaten aus der Fahrzeuggeschwindigkeit und dem Wischwinkel des Wischarms bezogen werden. Die fünfte Einrichtung führt aus den in der Einrichtung abgelegten Kennfelddaten eine weitere Ermittlung des Lastmoments auf den Wischarm durch.

Eine sechste Einrichtung 25 verarbeitet schließlich das vom Zustandsbeobachter ermittelte Lastmoment $\hat{M}$ und die von der vierten und der fünften Einrichtung ermittelten Werte des Lastmoments. Vorteilhafterweise resultiert dies in einer Ermittlung eines optimierten, auf den Wischarm wirkenden Lastmoments $\hat{M}_{opt}$. Die Verarbeitung, die die sechste Einrichtung 25 durchführt, kann eine Filterung sein, wobei die Filterung beispielsweise als eine gewichtete Mittelwertbildung oder als eine Tiefpassfilterung ausgestaltet sein kann.

Das erfindungsgemäße Verfahren kann sowohl zu einer Überwachung und Regelung von einem einzelnen Wischarm als auch von mehreren Wischarmen der Scheibenwischvorrichtung eingesetzt werden.

Ferner ist es möglich, mit dem erfindungsgemäßen Verfahren auch mehrere Scheibenwischvorrichtungen zu regeln.

Weiterhin ist es möglich, das erfindungsgemäße Verfahren während beliebig bestimmbarer Wischzyklen während des Wischens zu verwenden.

Bezugszeichenliste

1    Scheibenwischvorrichtung
2    Regler

| 3 | Elektromotor |
|---|---|
| 4 | Getriebe |
| 5 | Wischarm |
| 6 | Zustandsbeobachter |
| 7 | erste Korrektureinrichtung |
| 8 | zweite Korrektureinrichtung |
| 9 | dritte Korrektureinrichtung |
| 10 | vierte Korrektureinrichtung |
| 13 | fünfte Korrektureinrichtung |
| 20 | Erkennungseinrichtung |
| 21 | zweite Einrichtung |
| 22 | dritte Einrichtung |
| 23 | vierte Einrichtung |
| 24 | fünfte Einrichtung |
| 25 | sechste Einrichtung |
| 30 | Störmodell |
| 31 | Ausgangsmatrix des Störmodells |
| 32 | Streckenmodell |
| 33 | Ausgangsmatrix des Streckenmodells |
| 40 | erweitertes Streckenmodell |
| 50 | 1. Signalverarbeitungseinrichtung |
| 51 | 2. Signalverarbeitungseinrichtung |
| 52 | Ansteuerelektronik |
| S1 | erster Summationspunkt |
| S2 | zweiter Summationspunkt |
| S3 | dritter Summationspunkt |
| S4 | vierter Summationspunkt |

## Patentansprüche

1. Verfahren zum Überwachen und Regeln eines Prozesses zum Verstellen von beweglichen Teilen, insbesondere von Teilen einer Scheibenwischvorrichtung (1) eines Kraftfahrzeuges, wobei das Verfahren folgende Schritte umfasst:

    a) Zuführen von einer den Prozess kennzeichnenden Eingangsgrösse (u) und einer den Prozess kennzeichnenden Ausgangsmessgrösse (y) an eine Erkennungseinrichtung (20);
    b) Verwenden eines mathematischen Modells, das den Prozeß beschreibt, mit wenigstens einer Prozessgrösse, wobei das mathematische Modell in der Erkennungseinrichtung (20) abgelegt ist und wobei die Prozessgrösse der Ausgangsmessgrösse (y) zugeordnet ist;
    c) Optimieren der Prozessgrösse durch Vergleich der Prozessgrösse mit der Ausgangsmessgrösse (y);
    d) Ermitteln einer Korrekturgrösse (k) anhand der optimierten Prozessgrösse; und
    e) Zuführen der Korrekturgrösse (k) zur Eingangsgrösse (u) des Prozesses,
    wobei zum Ermitteln der Korrekturgrösse (k) zusätzlich zur optimierten Prozessgrösse als erste weitere Grösse die gewichtete Ausgangsmessgrösse (y), und als zweite weitere Grösse die gefilterte und gewichtete Ausgangsmessgrösse (y) verwendet wird,
    **dadurch gekennzeichnet, dass**
    zum Ermitteln der Korrekturgrösse (k) zusätzlich eine weitere den Prozess beschreibende Prozessgrösse, die in der Erkennungseinrichtung (20) im mathematischen Modell abgelegt ist, mittels Schritt c) optimiert wird und optimiert und gewichtet verwendet wird.

2. Verfahren nach Anspruch 1, **dadurch gekennzeichnet, dass** das in der Erkennungseinrichtung (20) abgelegte mathematische Modell mechanische und/oder elektrische Eigenschaften des Prozesses abbildet.

3. Verfahren nach einem der Ansprüche 1 bis 2, **dadurch gekennzeichnet, dass** als Prozessgrösse des mathematischen Modells eine Winkelgeschwindigkeit ($\omega_{WA}$) eines Wischarms der Scheibenwischvorrichtung (1) oder eine Winkelgeschwindigkeit ($\omega_M$) eines Elektromotors (3) der Scheibenwischvorrichtung (1) oder ein Drehwinkel ($\Phi_{WA}$) des Wischarms oder ein auf den Wischarm wirkendes Lastmoment $M_L$ oder eine Differenz zwischen der Winkel-

geschwindigkeit ($\omega_{WA}$) des Wischarms und einer Geschwindigkeit einer Getriebewelle der Scheibenwischvorrichtung (1) oder ein vom Elektromotor (3) übertragenes Drehmoment verwendet wird.

**4.** Verfahren nach einem der Ansprüche 1 bis 3, **dadurch gekennzeichnet, dass** zur Optimierung von wenigstens einer der verwendeten Prozessgrössen Kennfelddaten herangezogen werden, die in der Erkennungseinrichtung (20) abgelegt sind.

**5.** Verfahren nach Anspruch 4, **dadurch gekennzeichnet, dass** als Kennfelddaten Reibungskoeffizienten und/oder eine auf den Wischarm wirkende Windlast verwendet werden, wobei sich die Reibungskoeffizienten aus Daten über einen Feuchtigkeitszustand einer Scheibe und aus Daten über eine Wischgeschwindigkeit ergeben, und die Windlast sich aus Daten über eine Fahrzeuggeschwindigkeit und einem Wischwinkel ergibt.

**6.** Verfahren nach einem der vorhergehenden Ansprüche, **dadurch gekennzeichnet, dass** als mathematisches Modell ein Streckenmodell vorgesehen ist, das folgendermaßen beschrieben werden kann:

$$\dot{\underline{x}}_M = \underline{A}_M \underline{x}_M + \underline{B}_M \underline{u} + \underline{E}\,\underline{z}$$

wobei $\underline{A}_M$ eine Dynamikmatrix des Streckenmodells, $\underline{B}_M$ eine Eingangsmatrix des Steckenmodells und $\underline{E}$ eine Matrix, über die eine Störgrösse $\underline{z}$ auf das Streckenmodell wirkt, und $\underline{x}_M$ eine Zustandsgrösse des Streckenmodells darstellt.

**7.** Verfahren nach einem der vorhergehenden Ansprüche, **dadurch gekennzeichnet, dass** das mathematische Modell ein Störmodell umfasst, das folgendermaßen beschrieben werden kann:

$$\dot{\underline{x}}_S = \underline{A}_S\,\underline{x}_S$$

wobei $\underline{A}_S$ eine Dynamikmatrix des Störmodells und $\underline{x}_S$ eine **Zustandsgrösse des Störmodells** darstellt.

**8.** Verfahren nach einem der Ansprüche 6 oder 7, **dadurch gekennzeichnet, dass** das Streckenmodell in einer erweiterten Form in der Erkennungseinrichtung (20) abgelegt ist, wobei das erweiterte Streckenmodell durch folgende Beziehung beschrieben werden kann:

$$\underbrace{\begin{bmatrix} \dot{\underline{x}}_M \\ \dot{\underline{x}}_S \end{bmatrix}}_{\dot{\underline{x}}} = \underbrace{\begin{bmatrix} \underline{A}_M & \underline{E}\underline{C}_S \\ 0 & \underline{A}_S \end{bmatrix}}_{\underline{A}} \underbrace{\begin{bmatrix} \underline{x}_M \\ \underline{x}_S \end{bmatrix}}_{\underline{x}} + \underbrace{\begin{bmatrix} \underline{B}_M \\ 0 \end{bmatrix}}_{\underline{B}} \underline{u}$$

$$\underline{y} = \underbrace{\begin{bmatrix} \underline{C}_M & 0 \end{bmatrix}}_{\underline{C}} \begin{bmatrix} \underline{x}_M \\ \underline{x}_S \end{bmatrix}$$

wobei:

$\underline{C}_M$ eine Ausgangsmatrix des Streckenmodells und $\underline{C}_S$ eine Ausgangsmatrix des Störmodells darstellt.

**9.** Verfahren nach einem der vorhergehenden Ansprüche, **dadurch gekennzeichnet, dass** die Prozessgrössen mit Hilfe eines Zustandsbeobachters ermittelt werden, wobei der Zustandsbeobachter durch folgende Beziehung beschrieben werden kann:

$$\dot{\underline{x}} = (\underline{A} - \underline{LC})\,\hat{\underline{x}} + \underline{Bu} + \underline{Ly}$$

$$\hat{\underline{y}}_B = \underline{C}_B\hat{\underline{x}} + \underline{D}_B\underline{u}$$

wobei $\underline{L}$ eine in einem Entwurfsprozess des Zustandsbeobachters zu definierende Grösse , $\underline{C}_B$ und $\underline{D}_B$ Beobachtermatrizen und $\hat{\underline{y}}_B$ eine Ausgangsgrösse des Zustandsbeobachters darstellen.

**Claims**

1. Method for monitoring and controlling a process for adjusting movable parts, in particular parts of a windscreen wiper device (1) of a motor vehicle, the method comprising the following steps:

   a) feeding an input variable (u) characterizing the process and an output measured variable (y) characterizing the process to a detection device (20) ;
   b) using a mathematical model which describes the process and has at least one process variable, the mathematical model being stored in the detection device (20), and the process variable being assigned to the output measured variable (y);
   c) optimizing the process variable by comparing the process variable with the output measured variable (y);
   d) determining the correction quantity (k) with the aid of the optimized process variable; and
   e) feeding the correction quantity (k) to the input variable (u) of the process,
   in order to determine the correction quantity (k), use being made, in addition to the optimized process variable, of the weighted output measured variable (y), as first further variable, and of the filtered and weighted output measured variable (y), as second further variable,
   **characterized in that**
   in order to determine the correction quantity (k), a further process variable, which describes the process and is stored in the mathematical model in the detection device (20), is additionally optimized by means of step c), and is used in an optimized and weighted fashion.

2. Method according to Claim 1, **characterized in that** the mathematical model stored in the detection device (20) replicates mechanical and/or electrical properties of the process.

3. Method according to either of Claims 1 and 2, **characterized in that** the process variable of the mathematical model is provided as an angular velocity ($\omega_{WA}$) of a wiper arm of the windscreen wiper device (1), or an angular velocity ($\omega_M$) of an electric motor (3) of the windscreen wiper device (1), or a rotational angle ($\Phi_{WA}$) of the wiper arm, or a load torque $M_L$ acting on the wiper arm, or a difference between the angular velocity ($\omega_{WA}$) of the wiper arm and a speed of a transmission shaft of the windscreen wiper device (1), or a torque transmitted by the electric motor (3).

4. Method according to one of Claims 1 to 3, **characterized in that** characteristic map data which are stored in the detection device (20) are employed to optimize at least one of the process variables used.

5. Method according to Claim 4, **characterized in that** use is made as characteristic map data of friction coefficients and/or a wind load acting on the wiper arm, the friction coefficients resulting from data relating to a moisture state of a window pane, and from data relating to a wiping speed, and the wind load resulting from data relating to a vehicle speed and a wiping angle.

6. Method according to one of the preceding claims, **characterized in that** in system model which can be described as follows is provided as mathematical model:

$$\dot{\underline{x}}_M = \underline{A}_M \underline{x}_M + \underline{B}_M \underline{u} + \underline{E}\,\underline{z}$$

$\underline{A}_M$ representing a dynamic matrix of the system model, $\underline{B}_M$ representing an input matrix of the system model and $\underline{E}$ representing a matrix via which a disturbance variable $\underline{z}$ acts on the system model, and $\underline{x}_M$ representing a state variable of the system model.

**7.** Method according to one of the preceding claims, **characterized in that** the mathematical model comprises a disturbance model which can be described as follows:

$$\dot{\underline{x}}_S = \underline{A}_S \underline{x}_S$$

$\underline{A}_S$ representing a dynamic matrix of the disturbance model, and $\underline{x}_S$ representing a state variable of the disturbance model.

**8.** Method according to either of Claims 6 and 7, **characterized in that** the system model is stored in an expanded form in the detection device (20), it being possible to describe the expanded system model by the following relationship:

$$\underbrace{\begin{bmatrix} \dot{x}_M \\ \dot{x}_S \end{bmatrix}}_{\dot{\underline{x}}} = \underbrace{\begin{bmatrix} \underline{A}_M & \underline{E}\underline{C}_S \\ 0 & \underline{A}_S \end{bmatrix}}_{\underline{A}} \underbrace{\begin{bmatrix} x_M \\ x_S \end{bmatrix}}_{\underline{x}} + \underbrace{\begin{bmatrix} \underline{B}_M \\ 0 \end{bmatrix}}_{\underline{B}} \underline{u}$$

$$\underline{y} = \underbrace{\begin{bmatrix} \underline{C}_M & 0 \end{bmatrix}}_{\underline{C}} \begin{bmatrix} x_M \\ \underline{x}_S \end{bmatrix}$$

in which:

$\underline{C}_M$ represents an output matrix of the system model, and $\underline{C}_S$ represents an output matrix of the disturbance model.

**9.** Method according to one of the preceding claims, **characterized in that** the process variables are determined using a state observer, it being possible to describe the state observer by the following relationship:

$$\dot{\hat{\underline{x}}} = (\underline{A} - \underline{LC})\,\hat{\underline{x}} + \underline{B}\underline{u} + \underline{L}\underline{y}$$

$$\hat{\underline{y}}_B = \underline{C}_B \hat{\underline{x}} + \underline{D}_B \underline{u}$$

*L* representing a variable that is to be defined in a design process of the state observer, $\underline{C}_B$ and $\underline{D}_B$ representing the observer matrices, and $\hat{\underline{y}}_B$ representing an output variable of the state observer.

**Revendications**

1. Procédé pour surveiller et réguler un processus de réglage de parties mobiles, en particulier de parties d'un dispositif d'essuie-glace (1) d'un véhicule automobile, le procédé comprenant les étapes consistant à :

   a) appliquer une grandeur d'entrée (u) caractérisant le processus et une grandeur de mesure de sortie (y) caractérisant le processus à un dispositif de reconnaissance (20) ;
   b) utiliser un modèle mathématique qui décrit le processus, comportant au moins une variable de processus, dans lequel le modèle mathématique est stocké dans le dispositif de reconnaissance (20) et dans lequel la variable de processus est associée à la variable de mesure de sortie (y) ;
   c) optimiser la variable de processus en comparant la variable de processus à la variable de mesure de sortie (y) ;
   d) déterminer une valeur de correction (k) sur la base de la variable de processus optimisée ; et
   e) appliquer la valeur de correction (k) de la variable d'entrée (u) du processus,
   dans lequel, pour déterminer la variable de correction (k), on utilise, en plus de la variable de processus optimisée en tant que première autre variable, la variable de mesure (y) de sortie pondérée et, en tant que seconde autres variables, la variable de mesure de sortie (y) filtrée est pondérée,
   **caractérisé en ce que**,
   pour déterminer la variable de correction (k), une autre variable de processus décrivant le processus, qui est stockée dans le dispositif de reconnaissance (20) sous forme de modèle mathématique, est en outre optimisée au moyen de l'étape c) et est utilisée de manière optimisée et pondérée.

2. Procédé selon la revendication 1, **caractérisé en ce que** le modèle mathématique stocké dans le dispositif de reconnaissance (20) reproduit des propriétés mécaniques et/ou électriques du processus.

3. Procédé selon l'une quelconque des revendications 1 à 2, **caractérisé en ce qu'**on utilise en tant que variable de processus du modèle mathématique, une vitesse angulaire ($\omega_{WA}$) d'un bras d'essuie-glace du dispositif d'essuie-glace (1) ou une vitesse angulaire ($\omega_M$) d'un moteur électrique (3) du dispositif d'essuie-glace (1) ou un angle de rotation ($\Phi_{WA}$) du bras d'essuie-glace ou un couple de charge $M_L$ agissant sur le bras d'essuie-glace ou une différence entre la vitesse angulaire ($\omega_{WA}$) du bras d'essuie-glace et une vitesse d'un arbre d'entraînement du dispositif d'essuie-glace (1) ou un couple de rotation transmis par le moteur électrique (3).

4. Procédé selon l'une quelconque des revendications 1 à 3, **caractérisé en ce que**, pour optimiser au moins l'une des variables de processus utilisées, on fait appel à des données de champ caractéristique qui sont stockées dans le dispositif de reconnaissance (20).

5. Procédé selon la revendication 4, **caractérisé en ce qu'**on utilise en tant que données de champ caractéristique, des coefficients de frottement et/ou une charge aérodynamique agissant sur le bras d'essuie-glace, dans lequel les coefficients de frottement sont obtenus à partir de données concernant l'état d'humidité d'une vitre et à partir de données concernant la vitesse d'essuie-glace, et la charge aérodynamique est obtenue à partir de données concernant la vitesse du véhicule automobile et un angle d'essuie-glace.

6. Procédé selon l'une quelconque des revendications précédentes, **caractérisé en ce qu'**il est prévu en tant que modèle mathématique un modèle de système réglé pouvant être décrit de la manière suivante :

$$\dot{\underline{x}}_M = \underline{A}_M \underline{x}_M + \underline{B}_M \underline{u} + \underline{E}\ \underline{z}$$

où $\underline{A}_M$ représente une matrice dynamique du modèle de système réglé, $\underline{B}_M$ représente une matrice d'entrée du modèle de système réglé et $\underline{E}$ représente une matrice par l'intermédiaire de laquelle une variable perturbatrice $\underline{z}$ agit sur le modèle de système réglé, et $\underline{x}_M$ représente une variable d'état du modèle de système réglé.

7. Procédé selon l'une quelconque des revendications précédentes, **caractérisé en ce que** le modèle mathématique comprend un modèle de perturbation pouvant être décrit de la manière suivante :

$$\dot{\underline{x}}_S = \underline{A}_S \underline{x}_S$$

dans lequel $\underline{A}_S$ représente une matrice dynamique du modèle de perturbation et $\underline{x}_S$ représente une variable d'état du modèle de perturbation.

**8.** Procédé selon l'une quelconque des revendications 6 ou 7, **caractérisé en ce que** le modèle de système réglé est stocké sous une forme étendue dans le dispositif de reconnaissance (20), dans lequel le modèle de système réglé étendu peut être décrit par la relation suivante :

$$\underbrace{\begin{bmatrix} \dot{\underline{x}}_M \\ \dot{\underline{x}}_S \end{bmatrix}}_{\dot{\underline{x}}} = \underbrace{\begin{bmatrix} \underline{A}_M & \underline{E}\underline{C}_S \\ 0 & \underline{A}_S \end{bmatrix}}_{\underline{A}} \underbrace{\begin{bmatrix} \underline{x}_M \\ \underline{x}_S \end{bmatrix}}_{\underline{x}} + \underbrace{\begin{bmatrix} \underline{B}_M \\ 0 \end{bmatrix}}_{\underline{B}} \underline{u}$$

$$\underline{y} = \underbrace{\begin{bmatrix} \underline{C}_M & 0 \end{bmatrix}}_{\underline{C}} \begin{bmatrix} \underline{x}_M \\ \underline{x}_S \end{bmatrix}$$

dans lequel :

$\underline{C}_M$ représente une matrice de sortie du modèle de système réglé et $\underline{C}_S$ représente une matrice de sortie du modèle de système réglé.

**9.** Procédé selon l'une quelconque des revendications précédentes, **caractérisé en ce que** les variables de processus peuvent être déterminées à l'aide d'un observateur d'état, dans lequel l'observateur d'état peut être décrit par la relation suivante :

$$\dot{\hat{\underline{x}}} = \left( \underline{A} - \underline{L}\underline{C} \right) \hat{\underline{x}} + \underline{B}\underline{u} + \underline{L}\underline{y}$$

$$\hat{\underline{y}}_B = \underline{C}_B \hat{\underline{x}} + \underline{D}_B \underline{u}$$

dans lequel $\underline{L}$ représente une variable à définir lors d'un processus de conception de l'observateur d'état, $\underline{C}_B$ et $\underline{D}_B$ représentent des matrices d'observation et $\hat{\underline{y}}_B$ représente une variable de sortie de l'observateur d'état.

**Fig. 1**

**Fig. 2**

Fig. 3

Fig. 4

# Fig. 5

# Fig. 6a

# Fig. 6b

EP 1 300 304 B1

# Fig. 7a

$\omega_{WA} [rad/s]$

# Fig. 7b

$\omega_{WA} [rad/s]$

Tatsächlicher
Verlauf

Geschätzter
Verlauf

$t[s]$

17

# Fig. 8

Windlast

Wischwinkel

Anströmgeschwindigkeit

# Fig. 9

Geschätztes
Lastmoment $\hat{M}$
(aus Beobachter)

Feuchtigkeitszustand
der Scheibe (aus
Regensensor)

23

Wischgeschwindigkeit

25

Fahrzeuggeschwindigkeit

Wischwinkel

24

$\hat{M}_{opt}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751375 A

**In der Beschreibung aufgeführte Nicht-Patentliteratur**

- **GERD SCHULZ.** Regelungstechnik. Oldenbourg Verlag München Wien, 121ff